# NEUE EUROPÄISCHE PATENTSCHRIFT

(11) **EP 0 668 699 B2**
(45) Veröffentlichungstag und Bekanntmachung des Hinweises auf die Entscheidung über den Einspruch: **14.06.2006**
(45) Hinweis auf die Patenterteilung: 12.12.2001
(21) Anmeldenummer: 95101803.5
(22) Anmeldetag: 10.02.1995
(51) Int. Cl.: H04N 7/087, H04N 7/088, H04N 5/445

(54) **Verfahren zum Empfangen von in einem Fernsehsignal übertragenen Daten**
Method of receiving data transmitted in a television signal
Méthode pour recevoir des données transmises dans un signal de télévision

(30) Priorität: 17.02.1994 DE 4405020
(43) Veröffentlichungstag der Anmeldung: 23.08.1995
(73) Patentinhaber: Thomson Consumer Electronics Sales GmbH, 30453 Hannover (DE)
(72) Erfinder: Eitz, Gerhard, D-85586 Poing (DE)

(56) Entgegenhaltungen:
- EP-A- 0 128 093
- EP-A- 0 304 129
- EP-A- 0 556 701
- EP-A- 0 567 185
- DE-A- 3 021 647
- DE-C1- 3 634 757
- DE-C2- 3 914 697
- GB-A- 2 146 878
- PATENT ABSTRACTS OF JAPAN vol. 015, no. 195 (E-1069), 20.Mai 1991 & JP 03 052476 A (FUJITSU GENERAL LTD), 6.März 1991,
- Zeitschrift Elektronik 25/1990, Seite 58-65: Vidiotext mit mehr Komfort" von Zwölfer,U.

## Beschreibung

Die Erfindung bezieht sich auf ein Verfahren gemäß dem Oberbegriff des Patentanspruchs 1. Ein derartiges Verfahren ist aus der DE 39 14 697 C2 bekannt.

Bei dem herkömmlichen, derzeit in Europa (mit Ausnahme von Frankreich) benutzten Teletextsystem wird der sog. "Level 1" des Teletext-Standards WST (World System Teletext) benutzt, welcher es erlaubt, auf einer Seite, die aus einer Kopfreihe und 23 Reihen besteht, Texte und graphische Darstellungen mit eingeschränktem Grundzeichensatz auf einem Bildschirm darzustellen.

Wie aus DE 39 14697 C2 bekannt, können zusätzlich zu diesen Seiten mit Level-1 weitere Ergänzungsdaten für Sonderzeichen, Feinstrukturen und Farbschattierungen übertragen werden Empfangsseitig werden neben der gewünschten Level-1 Seite die zugehörigen Ergänzungsdaten zwischengespeichert und zusammen mit der betreffenden Level-1 Seite auf dem Bildschirm angezeigt. Die Feinstrukturen werden dabei ohne Anwendung von Komprimierverfahren pixelweise in besonderen Ergänzungsseiten übertragen.

Desweiteren ist es aus GB 2146 878 A bekannt, eine vereinfachte Anwahl von Teletextseiten durch Suchworte zu ermöglichen, in dem neben den Suchworten, welche in einer 24. Reihe zusammen mit einer Teletextseite auf dem Bildschirm angezeigt werden, versteckt zugehörige Seitennummem in einerweiteren Reihe übertragen werden.

Die EP-A-0 556 701 beschreibt eine mögliche Alternative bzw. Ergänzung zum sogenannten TOP- oder FLOF-Verfahren. Es wird vorgeschlagen, eine automatische Auswertung der Seiten nach dreistelligen Seitennummern vorzusehen. Die in einer Seite gefundenen Seitennummern können vom Decoder im Hintergrund gesucht und nach Eintreffen ohne Zutun des Benutzers abgespeichert werden. Erreicht werden kann mit diesem Vorschlag eine verbesserte Ausnutzung des Decoderspeichers bzw. eine verringerte mittlere Zugriffszeit.

Die DE-A-30 21 647 offenbart, in nicht belegten Fernsehzeilen neben den Teletextdaten auch Begleittoninformationen zu übertragen. Dabei kann eine Text/Tonumschaltung so vorgenommen werden, dass jeweils in einem Teil der Fernsehbild-Leerzeilen, die in einem gerade mit einem Fernsehprogramm belegten Fernsehkanal für den Videotext-Dienst verfügbar sind, Videotext-Informationen übertragen werden und in dem anderen Teil der Leerzeilen Begleittoninformationen. Ebenso können jedoch auch in einem gerade mit einem Fernsehprogramm belegten Fernsehkanal in allen für den Videotext-Dienstverfügbaren Fernsehbild-Leerzeilen Begleittoninformationen übertragen werden.

Die Aufgabe der Erfindung besteht gegenüber darin, bei einem Verfahren der eingangs erwähnten Art für einen zukünftigen Text-Dienst eine Darstellung von Bildern und Bildsequenzen, gegebenenfalls zusammen mit einer Textseite, und eine Ausgabe von Tönen unter weitgehender Ausnützung der in einem Empfänger bei einer digitalen Signalübertragungvorhandenen Einrichtungen, wie die Bild- und Ton-Dekodierung, zu erreichen.

Das erfindungsgemäße Verfahren wird durch die Ansprüche definiert.

Bei diesem Verfahren wird eine Darstellung von Bildern und die Ausgabe von Tönen, gegebenenfalls auf Anforderung des Nutzers, dadurch erreicht, daß zusammen mit den Text-, Bild- und Ton-Daten eine Text-Bild-Ton-Link Tabelle übertragen wird und der Dekoder entsprechend der Text-Bild-Ton-Link Tabelle, die vom Benutzer gewünschten Daten entsprechend einer mitübertragenen Kennung über die Bild- bzw. Ton-Kodierung auf dem Bildschirm bzw. Lautsprecher ausgibt.

Die Erfindung wird anhand der Zeichnungen näher erläutert. Es zeigt:
- Fig. 1: eine schematische Darstellung eines digitalen Fernsehempfängers mit einem Textdecoder, den Einrichtungen zur Bild- und Tondekodierung und den entsprechenden Zuführeinrichtungen nach der Erfindung;
- Fig. 2: eine schematische Darstellung einer Textseite mit der Text-Bild-Ton-LinkTabelle nach der Erfindung und den zugeordneten Bildund Ton-Daten;
- Fig. 3: eine Textseite mit einer Programmvorschau und den vom Dekoder entsprechend der-Text-Bild-Ton-Link Tabellehervorgehobenen Suchworten
- Fig. 4: die Textseite nach Fig. 3 mit einem für einen bestimmten Programmbeitrag zugeordneten Bild
- Fig. 5: die Textseite nach Fig. 3 mit einem weiteren Programmbeitrag zugeordneten Bild
- Fig. 6: eine besondere Seite in der Art eines TV-Guides, bei dem Bilderfür Programmbeiträge verschiedener Sendeanstalten zusammen mit den zugehörigen Sendeterminen aufgelistet sind.

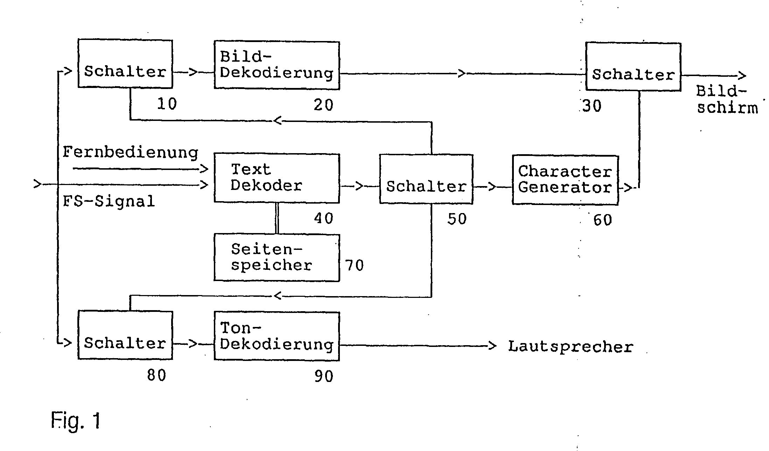

Fig. 1 zeigt ein Blockschaltbild eines zukünftigen Fernsehempfängers für die digitale Übertragung. Das digitale Fernsehsignal wird über einen Schalter 10 auf eine Bild-Dekodierung 20, welche die Fernsehbild-Daten dekodiert und über einen Schalter 30 auf dem Bildschirm anzeigt, und über einen Schalter 80 auf eine Ton-Dekodierung 90 geführt, welche die dekodierten Töne auf einem Lautsprecher ausgibt. Außerdem trennt ein Textdecoder 40, der über eine Fernbedienung gesteuert wird, aus dem ankommenden, digitalen Fernsehsignal die für ihn bestimmten Text-, Bild- und Ton-Daten aus dem ankommenden digitalen Fernsehsignal ab und speichert sie in einem Speicher 70 zwischen.

Auf Anforderung des Benutzers wird eine gewünschte Textseite aus dem Speicher 70 ausgelesen über einen Schalter 50 auf einen Character Generator 60 übertragen welcher über den Schalter 30 die betreffende Textseite auf dem Bildschirm anzeigt.

Außerdem lädt der Decoder die gesonderte Text-Bild-Ton-Link Tabelle und sucht nach Suchworten, die unter der angeforderten Seite in der Tabelle eingetragen sind und stellt sie zusammen mit der zugehörigen Textseite in geeigneter Weise auf dem Bildschirm dar. Wünscht der Nutzer weitere Informationen über eines der in den Suchwörtern angesprochenen Themen, so wählt er mit einem beweglichen Markierung o.ä. das betrefffende Suchwort aus. Daraufhin sucht der Decoder in der Text-Bild-Ton-Link Tabelle die zu dem angewählten Suchwort gehörige Kennung und die Adressierinformation. Werden die adressierten Daten durch die Kennung als Bild-Daten identifiziert, so werden die betreffenden Daten aus dem Speicher über den Schalter 50 und 10, auf die Bild-Dekodierung 20 geführt und über den Schalter 30 auf dem Bildschirm angezeigt. Werden dagegen Ton-Daten signalisiert, so werden sie aus dem Speicher über den Schalter 80 auf die Ton-Dekodierung 90 geführt und auf dem Lautsprecher ausgegeben.

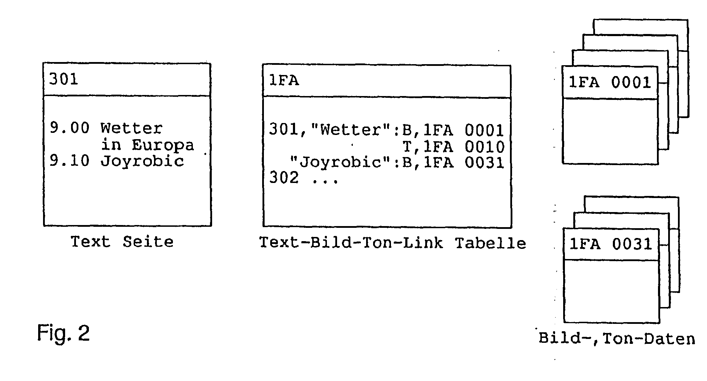

Fig.2 zeigt schematisch die Text-Bild-Ton-Link Tabelle mit einer Text-Seite und zugeordneten Bild- und Ton-Daten. Beispielsweise enthält die Text-Bild-Ton-Link Tabelle '1FA' unter der Seitennummer der Textseite '301' ein Suchwort 'Wetter' mit einer zugeordneten Kennung 'B' für Bilddaten und '1 FA 0001' als Adresse für die zugeordneten Bild-Daten; außerdem sind unter dem gleichen Suchwort und einer Kennung 'T' weitere TonDaten unter der Adresse '1 FA 0010' abrufbar. Außerdem enthält die Text-Bild-Ton-Link Tabelle weitere Einträge mit Kennungen und Adressen unter dem Suchwort 'JOYrobic' für die Textseite'301' und für die Textseite'302'. Außerdem sind weitere Kennungen für Bild- und Ton-Daten denkbar, die ohne Anforderung durch den Benutzer direkt bei Aufruf derTextseite automatisch geladen und ausgegeben werden.

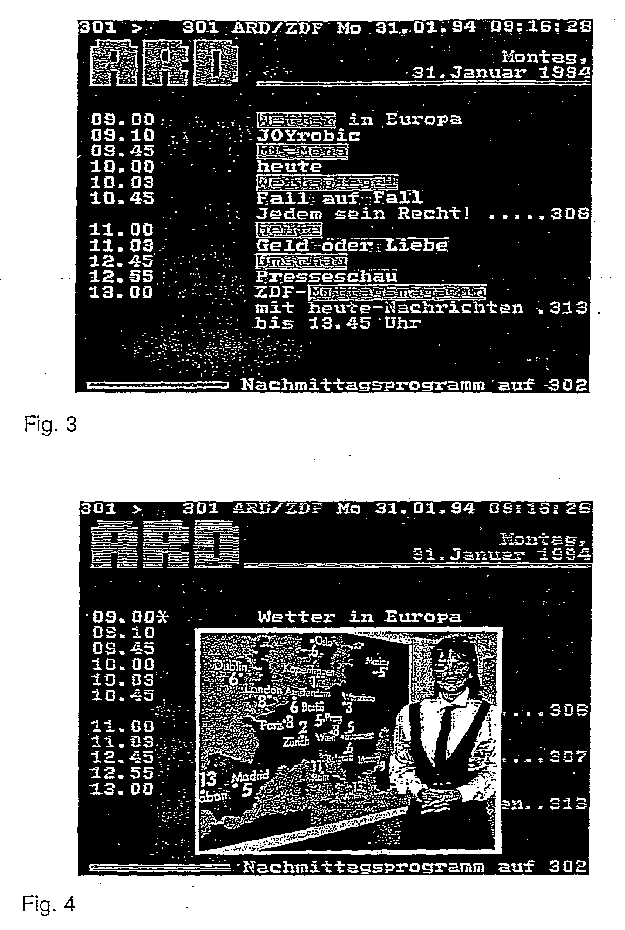

Zur Verdeutlichung der Erfindung wird in Fig. 3 eine Textseite mit einer Programmvorschau nach der Erfindung gezeigt. Der Dekoder markiert entsprechend der Text-Bild-Ton-Link Tabelle die Suchworte 'Wetter', 'JOYrobic', etc. in der angewählten Textseite '301'. Ebenso ist es denkbar, daß der Dekoder die für eine angewählte Textseite gültigen Suchworte in einem gesonderten Bereich auf dem Bildschirm darstellt.

In Fig. 4 ist die Programmvorschauseite '301' nach Anwahl des Suchwortes 'Wetter' durch den Nutzer dargestellt. Statt der Anzeige des zugehörigen Bildes können auch Bildsequenzen wiedergegeben werden.

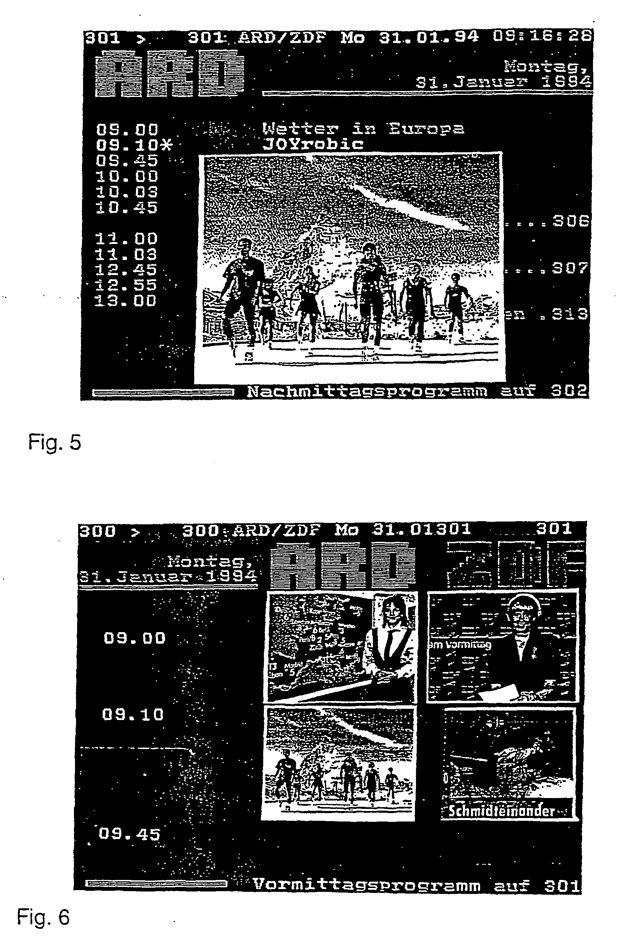

Fig. 5 zeigt die Programmvorschauseite '301' nach Anwahl des Suchwortes'JOYrobic'.

In Fig. 6 wird eine Möglichkeit der übersichtlichen Darstellung von Bildern von Programmbeiträgen für einem TV-Guide gezeigt. Der Textdekoder setzt dabei anhand der Text-Bild-Ton-Link Tabelle die entsprechend verkleinerten Bilder von Beiträgen verschiedener Sendeanstalten (hiervon ARD und ZDF) mit den zugehörigen Sendeterminen in einer speziellen Übersichtsseite zusammen. Zusätzlich kann der Benutzer sich mit der Fembedienung weitere Beiträge anderer Sendetermine oder anderer Sendeanstalten anzeigen lassen.

## Patentansprüche

1. Verfahren zum Empfangen von in einem Fernsehsignal übertragenen Daten, bei dem aus dem Fernsehsignal ein Datenstrom abgetrennt, die zu jeweils einer Seite gehörenden Daten gesammelt und die so zusammengestellten Seiten zwischengespeichert werden, wobei in dem Datenstrom eine oder mehrere gesonderte Seiten mit Listen übertragen und vom Decoder empfangsseitig ausgewertet werden, **dadurch gekennzeichnet, dass** in der gesonderten Seite (Text-Bild-Ton-Link Tabelle) Adressierungsinformationen und entsprechende Kennungen für Bild- und Tondaten enthalten sind, welche in dem Datenstrom übertragen werden, und die gesonderten Seiten ferner Suchworte und die den Suchworten jeweils zugeordneten Textseitennummern enthalten, und dass bei Anwahl eines besonders markierten Suchwortes in einer vom Benutzer selektierten Textseite durch den Benutzer ein Selektionsprozeß initialisiert wird, bei welchem
a) in der gesonderten Seite unter der Seitennummer der selektierten Textseite das ausgewählte Suchwort und die zugehörige Adressierungsinformation selektiert werden und
b) aufgrund der selektierten Adressierungsinformation die zugehörigen Bild- bzw. Tondaten abgerufen und entsprechend der Kennung wiedergegeben werden.

2. Verfahren nach Anspruch 1, **dadurch gekennzeichnet, dass** die abgerufenen Bilddaten zusammen mit dem Text der selektierten Textseite auf dem Bildschirm angezeigt werden.

3. Schaltungsanordnung zur Durchführung des Verfahrens nach Anspruch 1 oder 2 mit einem Textdecoder, welcher aus dem Fernsehsignal Textdaten abtrennt und in einem Speicher ablegt, und welcher aus dem Speicher Textdaten ausliest und einem Zeichengenerator zuführt, weicher die Textdaten in ein R-G-B-Signal umsetzt, **dadurch gekennzeichnet, dass** der Textdecoder eine oder mehrere mit den Textdaten übertragene gesonderte Seiten mit Adressierungsinformationen und Kennungen für Bild- und Tondaten lädt und bei einer Anwahl eines Suchwortes in einer selektierten Textseite die zu dem angewählten Suchwort gehörige Kennung und Adressierungsinformation in der gesonderten Seite unter der Seitennummer der selektierten Textseite sucht und die Bild- bzw Tondaten entsprechend der Kennung wahlweise einer Bilddecodiereinrichtung für ein Fernsehsignal oder einer Tondecodiereinrichtung für Fernsehton zuführt.

## Claims

1. A method for receiving data transmitted in a television signal, in which a data stream is separated from the television signal, the data in each case belonging to one page are collected and the pages thus assembled are temporarily stored, one or more separate pages with lists being transmitted in the data stream and being evaluated by the decoder at the receiving end, **characterized in that** the separate page (text-image-sound link table) contains addressing information and corresponding codes for image and sound data which are transmitted in the data stream, and the separate pages also contain search words and the text page numbers in each case associated with the search words, and **in that** when a specially marked search word is selected in a text page selected by the user, the user initializes a selection process in which
a) the selected search word and the associated addressing information are selected in the separate page under the page number of the selected text page, and
b) on the basis of the selected addressing information, the associated image and sound data are called up and reproduced in accordance with the code.

2. Method according to claim 1, **characterized in that** the image data called up are displayed together with the text of the selected text page on the screen.

3. Circuit arrangement for carrying out the method according to claim 1 or 2, comprising a text decoder which separates text data from the television signal and stores them in a memory and which reads text data out of the memory and supplies them to a character generator which converts the text data into an R-G-B signal, **characterized in that** the text decoder loads one or more separate pages transmitted with the text data with addressing information and identification for image and sound data and searches with a selection of a search word in a selected text page for identification and addressing information belonging to the selected search word in the separate page under the page number of the selected text page and the image respectively sound data are optionally supplied to an image decoding device for a television signal or a sound decoding device for television sound.

## Revendications

1. Méthode pour recevoir des données transmises dans un signal de télévision, dans laquelle un flux de données est séparé du signal de télévision, les données correspondant à une page sont dans chaque cas rassemblées et les pages ainsi assemblées sont mémorisées temporairement, une ou plusieurs pages séparées étant transmises avec des listes dans le flux de données et étant évaluées par le décodeur côté réception, **caractérisée en ce que** la page séparée (table de liaison texte-image-son) contient des informations d'adressage et des indicatifs d'identification correspondants pour les données d'image et de son qui sont transmises dans le flux de données, et les pages séparées contiennent également des mots de recherche et les numéros de pages de texte associés dans chaque cas aux mots de recherche, et **en ce que** lors du choix d'un mot de recherche particulier marqué dans une page de texte sélectionnée par l'utilisateur, l'utilisateur initialise un processus de sélection, dans lequel
a) le mot de recherche choisi et les informations d'adressage correspondantes sont sélectionnés dans la page séparée sous le numéro de page de la page de texte sélectionnée, et
b) en fonction des informations d'adressage sélectionnées, les données d'image ou de son associées sont appelées et reproduites selon l'indicatif d'identification.

2. Méthode selon la revendication 1, **caractérisée en ce que** les données d'image appelées sont affichées à l'écran avec le texte de la page de texte sélectionnée.

3. Configuration de circuit pour la mise en oeuvre de la méthode conformément à la revendication 1 ou 2 avec un décodeur de texte qui sépare des données de texte du signal de télévision et les stocke dans une mémoire, et qui extrait des données de texte de la mémoire et les transmet à un générateur de caractères qui convertit les données de texte en un signal R-V-B, **caractérisée en ce que** le décodeur de texte charge une ou plusieurs pages particulières transmises avec les données de texte, avec des informations d'adressage et des indicatifs pour les données d'image et de son, et recherche dans la page particulière, sous le numéro de page de la page de texte sélectionnée, l'indicatif appartenant au mot de recherche sélectionné et les informations d'adressage, lors de la sélection d'un mot de recherche dans une page de texte sélectionnée, et achemine les données d'image ou de son conformément à l'indicatif, à un dispositif de décodage d'image pour un signal de télévision ou à un dispositif de décodage de son pour un son de télévision.
